(19) **Europäisches Patentamt** / **European Patent Office** / **Office européen des brevets**

(11) **EP 1 695 073 B1**

(12) **EUROPEAN PATENT SPECIFICATION**

(45) Date of publication and mention
of the grant of the patent:
**05.12.2012 Bulletin 2012/49**

(21) Application number: **03819287.8**

(22) Date of filing: **20.12.2003**

(51) Int Cl.:
$G01N\ 27/22$ $^{(2006.01)}$

(86) International application number:
**PCT/US2003/040742**

(87) International publication number:
**WO 2005/068990 (28.07.2005 Gazette 2005/30)**

(54) **METHODS FOR CAPACITIVE BALANCING OF RELATIVE HUMIDITY SENSORS HAVING INTEGRATED SIGNAL CONDITIONING**

VERFAHREN ZUM AUSGLEICHEN DER KAPAZITÄTEN VON SENSOREN FÜR RELATIVE LUFTFEUCHTIGKEIT MIT INTEGRIERTER SIGNALBESTIMMUNG

PROCEDES POUR L'EQUILIBRAGE CAPACITIF DE CAPTEURS D'HUMIDITE RELATIVE AU CONDITIONNEMENT DES SIGNAUX INTEGRE

(84) Designated Contracting States:
**DE FR GB**

(43) Date of publication of application:
**30.08.2006 Bulletin 2006/35**

(73) Proprietor: **Honeywell International Inc.
Morristown, NJ 07960 (US)**

(72) Inventors:
• **DAVIS, Richard, A.
Plano, TX 75023 (US)**
• **KIRKPATRICK, Richard, A.
Richardson, TX 75081 (US)**

• **FOSTER, Ron
Fayetteville, AK 72701 (US)**
• **FOOTE, Steve, R.
Arlington, TN 38002 (US)**

(74) Representative: **Houghton, Mark Phillip et al
Patent Outsourcing Limited
1 King Street
Bakewell, Derbyshire DE45 1DZ (GB)**

(56) References cited:
| | |
|---|---|
| DE-A- 1 938 767 | FR-A- 2 687 834 |
| US-A- 4 470 096 | US-A- 4 924 064 |
| US-A- 5 296 819 | US-A1- 2004 008 471 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

This invention relates to semiconductor wafer-based devices. More particularly the present invention relates to semiconductor-based sensors. The present invention is also related to humidity sensors. More particularly, the present invention is related to methods of balancing the capacitive values of a top plate associated with a semiconductor-based relative humidity sensor including integrated signal conditioning.

BACKGROUND OF THE INVENTION

Solid-state semiconductor devices are found in most electronic components today. Semiconductor-based sensors, for example, are fabricated using semiconductor processes. Humidity sensors are but one class of semiconductor-based sensors finding many industrial applications. Modem manufacturing processes, for example, generally require measurement of moisture contents corresponding to dew points between - 40°C and 180°C, or a relative humidity between 1% and 100%. There is also a need for a durable, compact, efficient moisture detector that can be used effectively in these processes to measure very small moisture content in gaseous atmospheres.

Humidity can be measured by a number of techniques. In a semiconductor-based system, humidity can be measured based upon the reversible water absorption characteristics of polymeric materials. The absorption of water into a sensor structure causes a number of physical changes in the active polymer. These physical changes can be transduced into electrical signals which are related to the water concentration in the polymer and which in turn are related to the relative humidity in the air surrounding the polymer. Two of the most common physical changes are the change in resistance and the change in dielectric constant, which can be respectively translated into a resistance change and a capacitance change. It has been found, however, that elements utilized as resistive components suffer from the disadvantage that there is an inherent dissipation effect caused by the dissipation of heat due to the current flow in the elements necessary to make a resistance measurement. The result is erroneous readings, among other problems.

Elements constructed to approximate a pure capacitance avoid the disadvantages of the resistive elements. It is important in the construction of capacitive elements, however, to avoid the problems that can arise with certain constructions for such elements. In addition, there can also be inaccuracy incurred at high relative humidity values where high water content causes problems due to excessive stress and the resulting mechanical shifts in the components of the element. By making the component parts of the element thin, it has been found that the above-mentioned problems can be avoided and the capacitance type element can provide a fast, precise measurement of the relative humidity content over an extreme range of humidity as well as over an extreme range of temperature and pressure and other environmental variables.

Humidity sensing elements of the capacitance sensing type usually include a moisture-insensitive, non-conducting structure with appropriate electrode elements mounted or deposited on the structure along with a layer or coating of dielectric, highly moisture-sensitive material overlaying the electrodes and positioned so as to be capable of absorbing water from the surrounding atmosphere and reaching equilibrium in a short period of time. Capacitive humidity sensors are typically made by depositing several layers of material on a substrate material.

Semiconductor-based humidity sensors are well known in the art. For example, U.S. Patent No. 4,564,882, entitled "Humidity sensing element", issued January 14, 1986, discloses a capacitance humidity sensing element. The sensing element structure includes a substrate and a set of interdigitated electrodes deposited on the substrate surface. A first water permeable polymer film is deposited over the electrodes and a conductive mesh is formed over the first polymer film. A second polymer film is deposited over the mesh, burying the mesh between the two polymer films. The spacing between openings of the mesh is less than the thickness of the second polymer film. The square of the sum of the two polymer film thicknesses is minimized so that the response time is minimized. The mesh conductivity is made greater than a minimum value so that the resistive component of the impedance is small compared with the capacitive impedance, and thus the device impedance is independent of any instabilities in the conductive mesh impedance.

U.S. Patent No. 6,222,376 entitled "Capacitive moisture detector and method of making the same," issued April 24, 2001, to Tenney, discloses a multi-layer polymer RH sensor. The Tenney patent describes an improved capacitive moisture detector that includes a ceramic substrate with a plurality of layers of interdigitated electrodes and a plurality of interleaved moisture sensitive dielectric layers. Alternate electrodes are electrically coupled to provide two electrical contacts and a circuit representing multiple capacitors connected in parallel. According to an exemplary embodiment, six layers are provided, resulting in a structure presenting five parallel connected capacitors, thereby providing a total capacitance of the detector which is ten times that of previous detectors having the same footprint. According to a preferred embodiment of the Tenney invention, each dielectric layer is made relatively thin to effectively decrease the distance between the plates of each of the five capacitors. Since capacitance is inversely proportional to the distance between the dielectric layers, the thinness of the electrodes in the present invention also serves to increase capacitance.

According to another preferred embodiment of the Tenney patent, a floating porous conductive film is provided over the sixth electrode to contain the field of the top capacitor and render the detector immune from the effects of surface contaminants.

U.S. Patent No. 4,831,325, entitled "Capacitance measuring circuit", issued May 16, 1989, to Watson, discloses yet another semiconductor-based sensor for measuring humidity. In the Watson patent, a variable capacitor, which may be a humidity-sensitive capacitor, and a fixed reference capacitor are connected at a node. The node is clamped at a reference potential during a first phase of a two-phase measuring cycle as the variable capacitor is charged to a fixed voltage and the fixed capacitor is charged to a feedback voltage. The node is unclamped during the second phase and the capacitors are connected in a series loop to allow a redistribution of the charge in the capacitors or force a reversal of that charge with a voltage source. The deviation of the node from its reference potential after charge redistribution occurs is used as input to a feedback circuit that integrates that deviation over a number of cycles until it provides a feedback voltage of magnitude sufficient to cause the node deviation to be reduced to zero. A second reference capacitor can be supplied to provide an offset. The capacitors are constructed by simultaneous deposition on a substrate of a first plate followed by a dielectric film and a second plate. The second plate of the variable capacitor is porous to admit water molecules and the second plate of the fixed capacitor is impervious to water. According to Watson, simultaneous deposition provides similar characteristics for the capacitors.

An electrical connection problem has been found to reside in some semiconductor humidity sensor designs as described in, but not limited to, the Watson patent. Failed electrical connection can result where a large step height exists between the conductive electrical plates and the electrical interconnects, particularly during thermal/humidity cycling due to the relatively high Temperature Coefficient of Expansion of the sensing medium (e.g., dielectric film, polyimide insulator) and the swelling and shrinking of the sensing medium. By this mechanism, changing humidity or temperature can disconnect the sensing capacitor system from the chip electronics, or at least change the capacitive value of the sensor arrangement.

The present inventors have found that there is a need for improved humidity sensor designs. In view of the above-identified shortcomings of previous devices, the present inventors have invented methods for balancing capacitive values associated with sensors that utilize a top plate that is common to two series capacitors, such as the improved relative humidity sensor described herein. Accordingly, the present invention is described and presented as a means to address the shortcomings currently found in present humidity sensor devices.

DE-A-1938767 discloses a system suitable for balancing the capacitance of a common top plate of a capacitive sensor. US-A-4924064, FR-A-2687834 and US-A-4470096 all disclose suitable for balancing the capacitance of a common top plate of capacitive sensors.

According to the present invention there is provided a method for balancing capacitance of a top plate associated with at least two capacitors to provide a common series capacitive circuit in a semiconductor-based sensor, comprising the steps of:

(a) providing a sensor having a series capacitive circuit including a common top plate of first and second capacitors, Cx1 and Cx2 respectively, Cx1 further comprising a first bottom plate and Cx2 further comprising a second bottom plate, said common top plate, said first bottom plate, and said second bottom plate being separated by a common dielectric material;

(b) conducting capacitive measurement of said first and second capacitors by sampling signals rendered by said first and second capacitors while connected in series in a closed loop circuit to determine the capacitive values of Cx1 and Cx2 during a measuring cycle; and

(c) adjusting the capacitive values of Cx1 and Cx2 by creating voids in said top plate to keep the values of Cx1 and Cx2 substantially equal.

A sensor such as an integrated relative humidity sensor (IRHS) including a planar humidity sensitive capacitor structure can include:

a thin porous platinum top plate, a humidity sensitive polyamide dielectric, and a metal (e.g., titanium-tungsten) bottom plate. Two capacitors of the sensor can be effectively wired in series such that the metal bottom plates form the independent, electrically driven connections, and the thin top layer, which can be made of platinum, can be used to form a top plate of the sensor configuration and a common floating series interconnection for the two capacitors (e.g., Cx1 and Cx2). The floating series interconnection has been shown to eliminate problems associated with interconnection between the prior art thin platinum plate to thick aluminum or metal interconnections. But changes in humidity, such as would be common in a humidity sensor, can influence properties of the top plate. Moisture and humidity affecting the dielectric properties of a common top plate can thereby change the capacitive value of the series capacitive circuit enabled by the top plate, which is common to Cxl1 and Cx2.

In accordance with the present invention, a common top plate associated with providing capacitance to two capacitors, e.g., Cx1 and Cx2, in a sensor circuit is used for adjusting capacitive imbalance between Cx1 and Cx2. The capacitive value of the top plate, such a the porous top plate of a humidity sensor, is determined by monitoring a closed loop circuit of Cx1 and Cx2 to detect capacitive values of Cx1 and Cx2. Imbalances between Cx1 and Cx2 are corrected by creating voids in the top plate, to thereby keep the values of Cx1 and Cx2 substantially equal.

It is therefore an object of the invention to provide methods for balancing the capacitance of a common top plate in a sensor, such as a relative humidity sensor.

Additional objects and advantages of the invention will become apparent to those skilled in the art upon reference to the detailed description taken in conjunction with the provided figures.

BRIEF DESCRIPTION OF THE DRAWINGS

The accompanying figures, in which like reference numerals refer to identical or functionally-similar elements throughout the separate views and which are incorporated in and form part of the specification, further illustrate the present invention and together with the detailed description of the invention, serve to explain the principles of the present invention.

FIG. 1 is an illustration of a prior art humidity sensor;

FIG. 2 is a cut-away side view of a prior art humidity sensor;

FIG. 3 is a top plan view of the prior art humidity sensor of FIG. 2;

FIG. 4 is a cut-away side view of a humidity sensor in accordance with a preferred embodiment of the present invention wherein;

FIG. 5 is a top plan view of the humidity sensor of FIG. 4;

FIG. 6 is an illustration of another embodiment of the present invention wherein conductivity of the top plate is modified through area reduction in order to balance capacitance between Cx1 and Cx2;

FIG. 7 illustrates relative humidity-to-voltage transfer function components;

FIG. 8 illustrates circuit connectivity for operation during a Phase 1 operation;

FIG. 9 illustrates circuit connectivity for operation during a Phase 2 operation; and

FIG. 10 illustrates a parasitic capacitance included in an analysis of humidity sensor circuitry to understand the parasitic capacitances influence on a transfer function during circuit operation.

DETAILED DESCRIPTION OF THE INVENTION

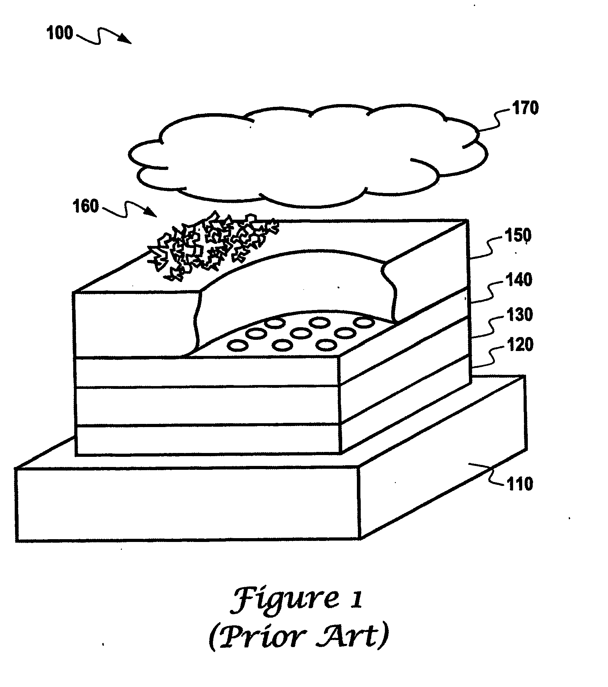

Referring to FIG. 1 (labeled prior art), a perspective view of the basic components found in a semiconductor-based humidity sensor 100 is shown. A semiconductor humidity sensor 100 is generally grown on a silicon substrate 110. The active sensor components include a lower 120 and an upper 140 electrically conductive plates sandwiching a humidity sensing medium 130, such as a polymer. The polymer material is sensitive to humidity, and its electrically conductive properties (resistance and/or capacitance) change as it absorbs moisture or as it dries. Lower 120 and upper 140 plates are electrically connected to sensor circuitry (not shown). A protective layer 150 can be used to protect the active components of the sensor (e.g., top plate 120 and sensing medium 130) from debris 160. Upper plate 140 is designed to be porous in order to enable humidity to enter into the sensing medium from an external environment of interest 170 (the monitored environment of interest).

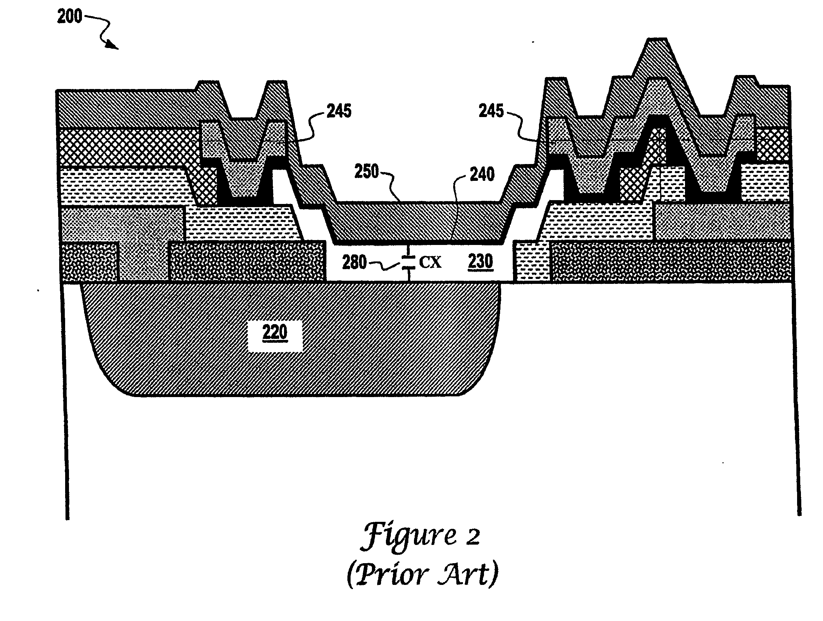

Referring to FIG. 2 (labeled prior art), an Integrated Relative Humidity Sensor (IRHS) that has been manufactured and sold by Honeywell, the present assignee, is illustrated. The illustrated semiconductor sensing system uses a planar humidity sensitive capacitor structure 200 that includes a thin porous platinum metal top plate 240 (top porous plate) covered by a protective polymer layer 250, and a humidity sensitive polyamide dielectric 230 sandwiched between the top porous plate 240 and a silicon bottom plate 220 (or substrate). The top plate 240, the polyamide dielectric 230 and the bottom plate 220 are at the heart of the capacitor function. Capacitance (Cx) formed with these three components is symbolized schematically in the drawing as 280. Variations in humidity affecting the dielectric 230 create a variable capacitive value between the top porous plate 240 and bottom plate 220.

The top porous plate 240 makes an electrical connection to chip electronics by contacting the thick aluminum interconnects 245. It has been found that the large step height between what consists of a very thin and porous conductive layer as the top porous plate 240 and the thick aluminum interconnects 245 tend to result in the formation of a weak mechanical connection. A common sensor failure mechanism is found when this weak mechanical connection breaks down during thermal/humidity cycling of the sensing device 200 due to the relatively high Temperature Coefficient of Expansion (TCE) of the sensing medium 230 (polyamide dielectric) and its swelling and shrinking due to changing humidity, which can physically keep the sensing capacitor from effective operation.

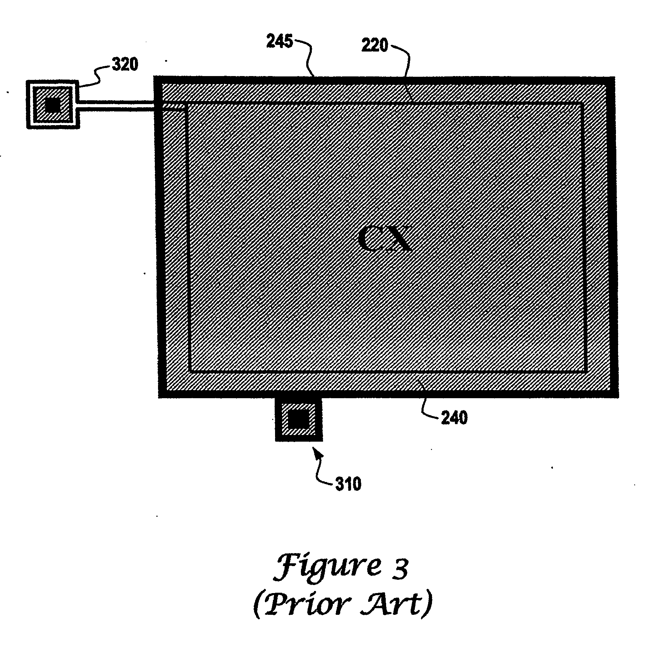

FIG. 3 (labeled prior art) illustrates a top plan view of the top porous plate 240 layer of the prior art humidity sensor shown in FIG. 2. As seen in FIG. 3, top porous plate 240 is electrically connected with an electrical contact 310. Bottom plate 220 (P silicon) is also electrically connected to an electrical contact 320. The border area represents the interconnects 245 to which the top porous layer 240 becomes electrically connected during fabrication. It is along the interconnects 245 where the top porous plate 240 can become electrically detached due to expansion of the sensing medium (not shown). The top porous plate 240 is shown as one large conductive layer operating as a first plate of the humidity sensing capacitor, whereas the bottom plate operates as the second plate of the humidity sensing capacitor.

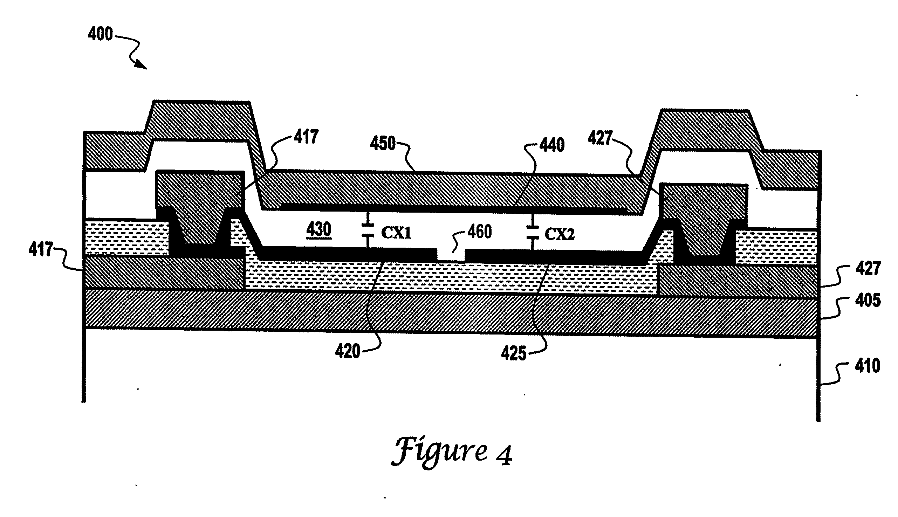

Referring to FIG. 4, a new capacitor configuration will now be described for an improved semiconductor-based humidity sensor 400. The humidity sensor includes a substrate 410. Insulating materials 405 can function as a buffer between the substrate 410 and first 420 and second 425 lower contact plates. First lower contact plate 420 is electrically connected to a first connector 417. Second lower contact plate 425 is electrically connected to a second connector 427. A sensing medium 430 is disposed on top of the first 420 and second 425 lower contact plates. A porous platinum top plate 440 is then disposed on top of the sensing medium 430. A breathable or porous protective layer 450 can also be disposed on top of the top plate for protection of the top plate 440 and sensing medium layer 430. Two capacitors Cx1 and Cx2 are schematically illustrated in respective positions within the sensing medium 430 between the first lower contact plate 420 and top plate 440 and the second lower contact plate 425 and the top plate 440. The gap/barrier 460 formed as an electrical disconnect between first 420 and second 425 lower contact plates creates the series capacitor configuration for Cx1 and Cx2.

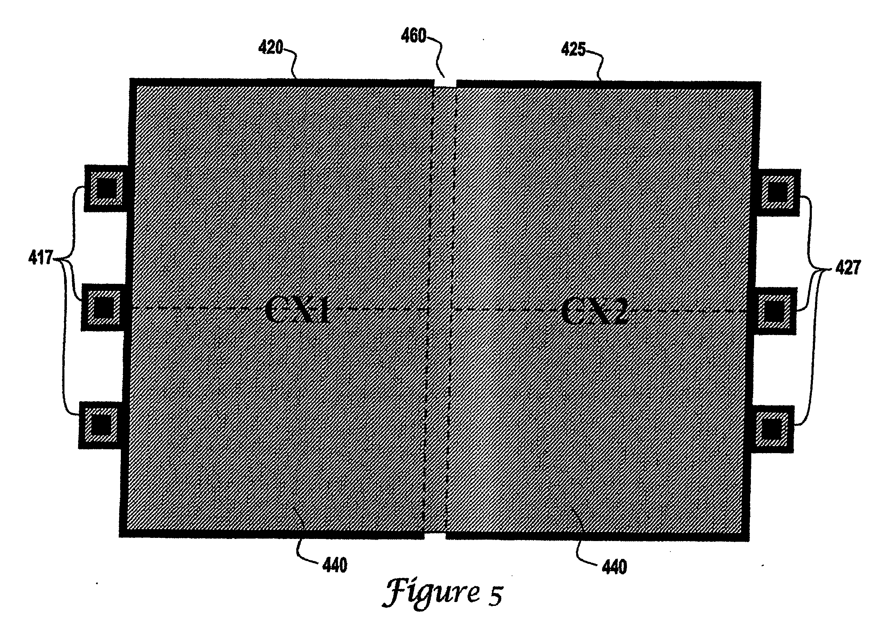

Referring to FIG. 5, a representative top view of the capacitive plates that provide electrical contact for generating capacitance through a sensing medium (not shown) is shown. As shown in FIG. 5, capacitor Cx1 includes common top plate 440 (common to both Cx1 and Cx2) and a first lower contact plate 420 in further electrical contact with a first electrical contact 417. Capacitor Cx2 includes common top plate 440 as its first contact and second lower contact plate 425, which is in further electrical contact with second electrical contact 427. As shown in FIG. 5, a conductive barrier or insulating gap 460 is provided between the lower contact plates 420 and 425. This gap controls stray capacitance in parallel with Cx1 and Cx2, and controls parasitic capacitance between common top plate 440 and the underlying silicon substrate 410 (shown in FIG. 4). The gap 460, which can also be seen in FIG. 4 between the lower contact plates, near the center of the device, is filled with the humidity-sensitive dielectric (although other dielectrics could be utilized).

The capacitive values of Cx1 and Cx2 must not only be physically realized using the gap/barrier shown in FIGs. 4 and 5, but also adjusted for the device to operate properly (i.e., calibrated). It is known in the art to control or adjust capacitance through variable capacitors. In the present invention, however, it is not feasible to provide for ongoing capacitive control. Therefore, the present inventors have devised methods of adjusting the capacitive values of Cx1 and Cx2 while keeping their values substantially equal prior to applying a protective layer 450 as shown in FIG. 4 and/or packaging the device. The present inventors have also determined systems that can be used to carry out their methods.

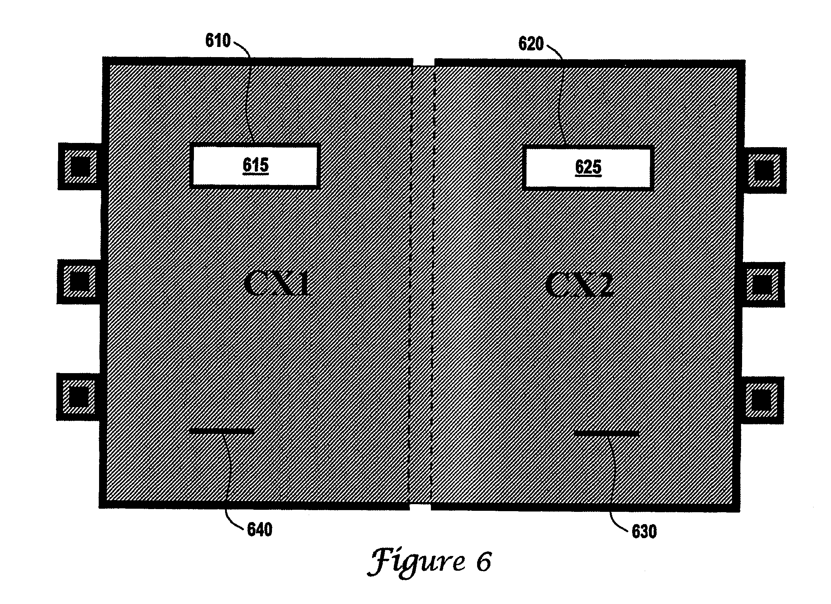

Referring to FIG. 6, a representative top view of the capacitive plates that provide electrical contact for generating capacitance through a sensing medium (not shown) is illustrated. As shown in FIG. 6, the common top plate 440 (common to both Cx1 and Cx2) has been removed or etched at three locations. A first location relative to Cx1 shows a box-like etching 610 on common top plate 440, and a second location relative to Cx2 shows box-like etching 620. An etching procedure will cut through the entire common top plate 440 layer, effectively removing capacitive value associated with box-like areas 615 and 625 of the common top plate 440. The resulting area available for electron build-up on the plate 440 is thereby lessened, thus lowering the capacitive value of Cx1 and Cx2. Care is taken to make areas 615 and 625 approximately equal. It should be appreciated by those skilled in the art, however, that circumstances may warrant that areas on the top plate 440, such as those depicted by areas 615 and 625, should not be equal in order to achieve capacitive balancing between Cx1 and Cx2. It should also be appreciated by those skilled in the art that areas or voids can be introduced into a top plate of a sensor, such as top plate 440, using systems currently known in the art for removing material within the semiconductor art. For example, systems such as etching equipment, lasers and precise mechanical cutting instruments and other precision cutting instruments known in the art can be used within a system to carry out the methods of the present invention. A system would require measuring devices known in the art for enabling the measurement of capacitance, such as oscilloscopes, microprocessor-based analytical tools and other measuring devices. A voltage source would be required to provide power to the series capacitive circuit during measurement. Voltage can also be applied during cutting of the top plate. Voltage sources (DC and AC) are also well known in the art. It is preferable that the voltage source provides a constant voltage during measuring and/or cutting.

As seen on the top common plate 440 area associated with Cx2, a slit 630 and/or 640 has also been etched into the top common plate 440. The purpose of etching slits 630 and/or 640 is similar in reason to that of creating the box-like areas 625 and 615, which was to reduce the amount of common top plate 440 area that will contribute to the overall capacitance of either or both Cx1 or Cx2.

The initial adjustments made to Cx1 (615) and Cx2 (625) can be seen as coarse adjustments to the net value of the sensing capacitance, whereas slits 640 and 630 can be seen as fine adjustments. The etching procedure can be used anywhere on the top plate deemed necessary in order to adjust the net capacitance of Cx1 and Cx2, while keeping the values of Cx1 and Cx2 substantially equal. It should be appreciated to those skilled in the art from the foregoing discussion that adjustments can be carried out in a series of etchings and with etchings of various shapes and sizes. Any adjustments will generally be carried out while trying to maintain equality in value between Cx1 and Cx2.

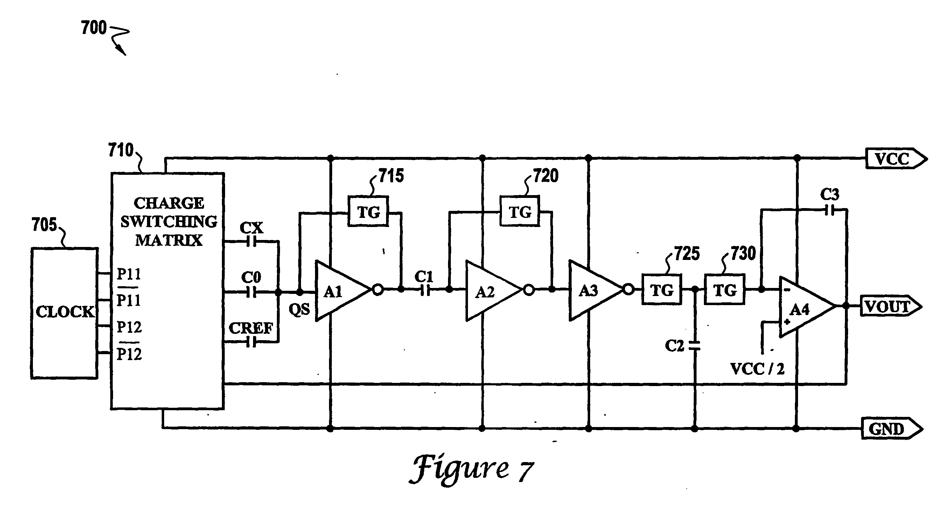

The charge balancing method used to transduce relative humidity to a linear voltage will now be described. Most linear control circuits are utilized to regulate voltages or currents; however, the high impedance capacitive nature of the humidity sensor is more readily handled by control of charge. FIG. 7 shows the essential components that comprise the relative humidity-to-voltage transfer function in terms of a circuit diagram 700. C0, C1, C2, C3, and Cref are all capacitors that are designed to be insensitive to humidity and that are fabricated at the same time and from the same materials. Thus, while their absolute values of capacitance will vary, the ratios will track very closely. Cx is designed to be sensitive to humidity and is fabricated at a different time and from different materials than the aforementioned capacitors. The switching matrix 710 varies the wiring scheme for capacitors: Cx, C0, and Cref using two-phase, non-overlapping, dual polarity clocks, as can be provided by clock generator 705. Note that one end of all three capacitors is always connected in common, thus providing a charge summing node, Qs. Inverters A1, A2, and A3, and capacitor C1, and the pair of associated transmission gates 715 and 720 form a high gain comparator. C2 and its pair of associated transmission gates 725 and 730 are the switched capacitor equivalent of a resistor which coupled with amplifier A4 and feedback capacitor C3 form an integrator.

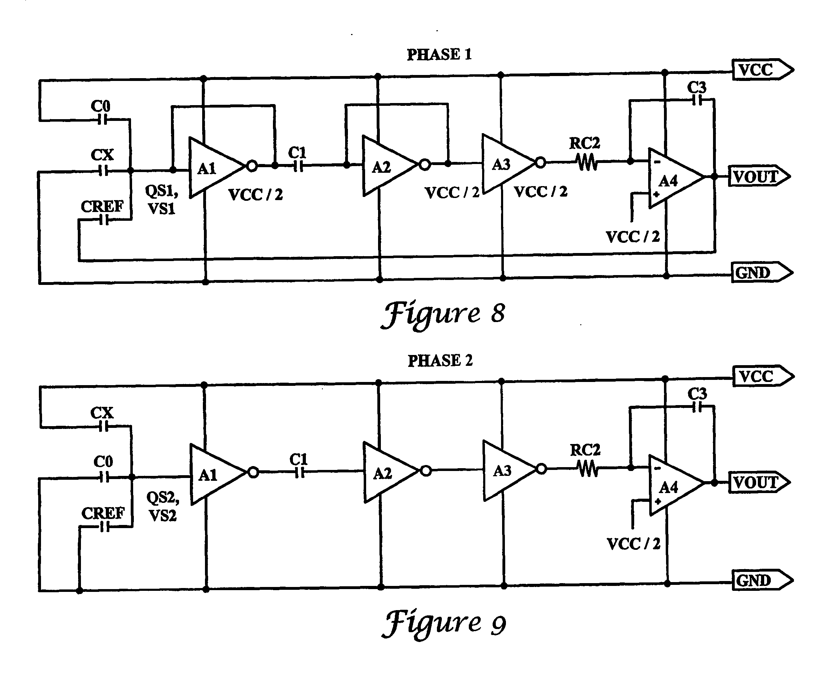

FIGs. 8 and 9 show the circuit connectivity for operation during "Phase 1" and "Phase 2" respectively. Neglecting Cref for the moment and concentrating on C0 and Cx, note that they effectively form a voltage divider. In Phase 1 C0 is pulled up to Vcc and Cx is pulled down to GND and vice versa during Phase 2. Thus a periodic differential voltage is created which is a function of the difference in capacitance values. Those skilled in the art will recognize this as a half bridge sensor configuration. During Phase 1, inverters A1 and A2 short their input node to their output node, which, when implemented with complementary FETs, forms a voltage divider.

FIG. 8 indicates that all three of these FETs are designed to produce a half supply transfer function in this configuration, thus driving both the charge summing node and the output of A3 to Vcc/2 during Phase 1. These transmission gate shorts are opened up during Phase 2, creating a high gain inverting comparator, which allows small movement in the charge summing node voltage relative to Vcc/2 to drive the output of A3 to Vcc or GND. Thus A3, the output of the comparator, controls the integrator. During Phase 1, the output of A3 and the non-inverting input of A4 are both at Vcc/2, which puts the integrator into a "Hold" state. So Phase 1 can be thought of as a measurement or sampling phase during which Cref is charged. During Phase 2, Cref is disconnected from the integrator output and reconnected to GND and the comparator responds to the charge-summing node. If the comparator output goes to GND, then the output of the integrator increases linearly. If the comparator output goes to Vcc, then the output of the integrator decreases linearly. If the charge-summing node effectively remains at Vcc/2 during Phase 2, then the integrator remains in the "Hold" state, though this is rarely the case. So Phase 2 can be thought of as the negative feedback adjustment phase.

The following equations mathematically describe the operation of the aforementioned circuit. Equations 1 and 2 calculate the charge at the summing node during Phase 1 and 2, respectively. The negative feedback results in Qs1 and Vs1 being substantially equal to Qs2 and Vs2. Equation 3 mathematically describes the resulting transfer function for the complete circuit operation.

$$EQ.1 \quad Qs1 = Cx \cdot Vs1 + C0 \cdot (Vs1 - Vcc) + Cref \cdot (Vs1 - Vout)$$

$$EQ.2 \quad Qs2 = Cx \cdot (Vs2 - Vcc) + C0 \cdot Vs2 + Cref \cdot Vs2$$

$$EQ.3 \quad Vout = \left( \frac{Cx}{Cref} \right) \cdot Vcc - \left( \frac{C0}{Cref} \right) \cdot Vcc$$

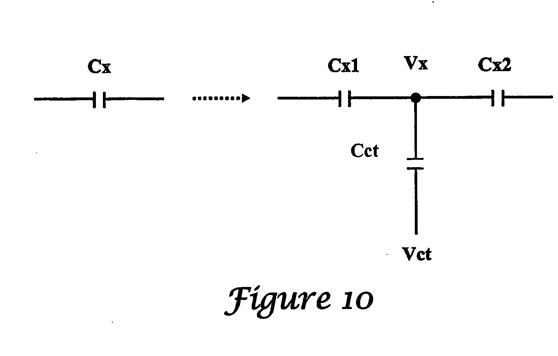

As described previously, the new construction method for the humidity sensitive capacitor, Cx, minimizes the problems due to mechanical weakness found in previous construction methods. As shown in FIG. 10, however, this creates a parasitic capacitance, Cct, which is included in the analysis to understand its influence on the transfer function for the complete circuit operation. Equation 4 mathematically describes the new transfer function, including the effect of the parasitic capacitor, Cct, and mismatch (mm) between Cx1 and Cx2.

$$EQ.4 \quad Vout = \left( \frac{4 \cdot Cx^2 \cdot \left(1-mm^2\right)}{\left(4 \cdot Cx + Cct\right) Cref} \right) \cdot Vcc - \left( \frac{C0}{Cref} \right) \cdot Vcc$$

Note that if the parasitic capacitance, Cct, is much less than four (4) times Cx, and the squared mismatch, $mm^2$, between Cx1 and Cx2 is much less than one, then Equation 4 simplifies back to Equation 3. Therefore, the parasitic capacitance from the floating interconnection to the underlying silicon should be minimized. Also, since the interconnection, Vx, is electrically floating, charge build-up on the top surface of the chip is minimized to avoid destructive breakdown of the sensing capacitors. And, as shown in FIG. 6 and discussed previously, the adjustments made to Cx should be divided substantially equally between Cx1 and Cx2 to minimize the sensitivity reduction due to mismatch error.

## Claims

1. A method for balancing capacitance of a top plate associated with at least two capacitors to provide a common series capacitive circuit in a semiconductor-based sensor, comprising the steps of:

   (a) providing a sensor (400) having a series capacitive circuit including a common top plate (440) of first and second capacitors, Cx1 and Cx2 respectively, Cx1 further comprising a first bottom plate (420) and Cx2 further comprising a second bottom plate (425), said common top plate, said first bottom plate, and said second bottom plate being separated by a common dielectric material (430);
   (b) conducting capacitive measurement of said first and second capacitors by sampling signals rendered by said first and second capacitors while connected in series in a closed loop circuit to determine the capacitive values of Cx1 and Cx2 during a measuring cycle; and
   (c) adjusting the capacitive values of Cx1 and Cx2 by creating voids (615,625) in said top plate (440) to keep the values of Cx1 and Cx2 substantially equal.

2. The method of claim 1, wherein step (b) further comprises the steps of:

   charging said series capacitive circuit to a fixed voltage;
   monitoring said closed loop circuit to detect capacitive value of Cx1 and Cx2 provided by the top plate (420) and dielectric (430) associated with Cx1 and Cx2.

3. The method of claim 1, further comprising the steps of:

   (d) charging said series capacitive circuit to a fixed voltage;
   (e) monitoring said closed loop circuit to detect any change in capacitive value of Cx1 and Cx2 provided by said adjusting step.

4. The method of claim 3, repeating steps (c), (d) and (e) until a desired capacitive value for at least one of Cx1 and Cx2 is achieved.

5. The method of claim 4, said repeating of steps (c),(d) and (e) until a desired capacitive value for at least one of Cx1 and Cx2 is achieved is carried out while maintaining said fixed voltage charge over the series capacitive circuit.

**6.** The method of claim 3, repeating steps (c), (d) and (e) while maintaining said fixed voltage charge over the series capacitive circuit until a desired capacitive value for at least one of Cx1 and Cx2 is achieved.

**7.** The method of claim 6, wherein said common dielectric material (420) is sensitive to humidity and said sensor (400) is a relative humidity sensor, wherein changes in humidity affect said humidity sensitive dielectric and thereby change the capacitive value of said series capacitive circuit.

**8.** The method of claim 7, repeating of steps (c), (d) and (e) until a desired capacitive value for at least one of Cx1 and Cx2 is achieved is carried out while maintaining said fixed voltage charge over the series capacitive circuit and considering any affect of changes in said humidity on said humidity sensitive dielectric (420) and said capacitive value.


**Patentansprüche**

**1.** Verfahren zum Ausgleichen einer Kapazität einer mit mindestens zwei Kondensatoren assoziierten Deckplatte zum Bereitstellen eines gemeinsamen kapazitiven Reihenstromkreises in einem halbleiterbasierten Sensor, umfassend die folgenden Schritte:

(a) Bereitstellen eines Sensors (400) mit einem kapazitiven Reihenstromkreis einschließlich einer gemeinsamen Deckplatte (440) des ersten und zweiten Kondensators Cx1 bzw. Cx2, wobei Cx1 weiterhin eine erste Bodenplatte (420) umfasst und Cx2 weiterhin eine zweite Bodenplatte (425) umfasst, wobei die gemeinsame Deckplatte, die gemeinsame Bodenplatte und die zweite Bodenplatte durch ein gemeinsames dielektrisches Material (430) getrennt sind;
(b) Durchführen einer kapazitiven Messung des ersten und zweiten Kondensators durch Abtasten von Signalen, die von dem ersten und zweiten Kondensator wiedergegeben werden, während sie in einem Regelkreis in Reihe geschaltet sind, um die kapazitiven Werte von Cx1 und Cx2 während eines Messzyklus zu bestimmen; und
(c) Justieren der kapazitiven Werte von Cx1 und Cx2 durch Erzeugen von Hohlräumen (615, 625) in der Deckplatte (440), um die Werte von Cx1 und Cx2 im Wesentlichen gleich zu halten.

**2.** Verfahren nach Anspruch 1, wobei Schritt (b) weiterhin die folgenden Schritte umfasst:

Laden des kapazitiven Reihenstromkreises auf eine feste Spannung;
Überwachen des geschlossenen Regelkreises zum Detektieren des kapazitiven Werts von Cx1 und Cx2, von der Deckplatte (420) und dem Dielektrikum (430), mit Cx1 und Cx2 assoziiert, geliefert.

**3.** Verfahren nach Anspruch 1, das weiterhin die folgenden Schritte umfasst:

(d) Laden des kapazitiven Reihenstromkreises auf eine feste Spannung;
(e) Überwachen des geschlossenen Regelkreises, um eine etwaige Änderung bei dem kapazitiven Wert von Cx1 und Cx2, durch den Justierschritt bereitgestellt, zu detektieren.

**4.** Verfahren nach Anspruch 3, wobei die Schritte (c), (d) und (e) wiederholt werden, bis ein gewünschter kapazitiver Wert für mindestens einen von Cx1 und Cx2 erreicht ist.

**5.** Verfahren nach Anspruch 4, wobei das Wiederholen der Schritte (c), (d) und (e), bis ein gewünschter kapazitiver Wert für mindestens einen von Cx1 und Cx2 erreicht ist, ausgeführt wird, während die feste Spannungsladung über dem kapazitiven Reihenstromkreis beibehalten wird.

**6.** Verfahren nach Anspruch 3, wobei die Schritte (c), (d) und (e) wiederholt werden, während die feste Spannungsladung über dem kapazitiven Reihenstromkreis beibehalten wird, bis ein gewünschter kapazitiver Wert für mindestens einen von Cx1 und Cx2 erreicht wird.

**7.** Verfahren nach Anspruch 6, wobei das gemeinsame dielektrische Material (420) gegenüber Feuchtigkeit empfindlich ist und der Sensor (400) ein Relativfeuchtigkeitssensor ist, wobei Änderungen bei der Feuchtigkeit das feuchtigkeitsempfindliche Dielektrikum beeinflussen und dadurch den kapazitiven Wert des kapazitiven Reihenstromkreises ändern.

**8.** Verfahren nach Anspruch 7, wobei das Wiederholen der Schritte (c), (d) und (e), bis ein gewünschter kapazitiver Wert für mindestens einen von Cxl und Cx2 erreicht ist, ausgeführt wird, während die feste Spannungsladung über dem kapazitiven Reihenstromkreis beibehalten wird und ein etwaiger Effekt von Änderungen bei der Feuchtigkeit auf das feuchtigkeitsempfindliche Dielektrikum (420) und den kapazitiven Wert berücksichtigt wird.

## Revendications

1. Procédé pour équilibrer la capacitance d'une plaque supérieure associée à au moins deux condensateurs afin d'obtenir un circuit capacitif série commun dans un capteur à base de semi-conducteur, lequel comprend les étapes consistant à :

(a) fournir un capteur (400) comprenant un circuit capacitif série comprenant une plaque supérieure commune (440) d'un premier et d'un second condensateur Cx1 et Cx2 respectivement, Cx1 comprenant en outre une première plaque de fond (420) et Cx2 comprenant en outre une seconde plaque de fond (425), ladite plaque supérieure commune, ladite première plaque de fond et ladite seconde plaque de fond étant séparées par un matériau diélectrique commun (430) ;
(b) effectuer une mesure capacitive desdits premier et second condensateurs en échantillonnant des signaux émis par lesdits premier et second condensateurs pendant qu'ils sont connectés en série dans un circuit à boucle fermée afin de déterminer les valeurs capacitives de Cx1 et de Cx2 pendant un cycle de mesure ; et
(c) ajuster les valeurs capacitives de Cx1 et de Cx2 en créant des vides (615, 625) dans ladite plaque supérieure (440) de sorte que les valeurs de Cx1 et Cx2 restent essentiellement égales.

2. Procédé selon la revendication 1, dans lequel l'étape (b) comprend en outre les étapes consistant à :

- charger ledit circuit capacitif série à une tension fixe ;
- contrôler ledit circuit à boucle fermée afin de détecter une valeur capacitive de Cx1 et de Cx2 fournie par la plaque supérieure (420) et le diélectrique (430) associé à Cx1 et Cx2.

3. Procédé selon la revendication 1, comprenant en outre les étapes consistant à :

(d) charger ledit circuit capacitif série à une tension fixe ; et
(e) contrôler ledit circuit à boucle fermée afin de détecter tout changement de la valeur capacitive de Cx1 et Cx2 obtenue lors de ladite étape d'ajustement.

4. Procédé selon la revendication 3, consistant à répéter les étapes (c), (d) et (e) jusqu'à ce qu'une valeur capacitive voulue pour l'un au moins de Cx1 et de Cx2 soit obtenue.

5. Procédé selon la revendication 4, dans lequel la répétition des étapes (c), (d) et (e) jusqu'à ce qu'une valeur capacitive voulue pour l'un au moins de Cx1 et de Cx2 soit obtenue, se fait tout en maintenant ladite charge de tension fixe sur le circuit capacitif série.

6. Procédé selon la revendication 3, consistant à répéter les étapes (c), (d) et (e) tout en maintenant ladite charge de tension fixe sur le circuit capacitif série jusqu'à ce qu'une valeur capacitive voulue pour l'un au moins de Cx1 et de Cx2 soit obtenue.

7. Procédé selon la revendication 6, dans lequel le matériau diélectrique commun (420) est sensible à l'humidité tandis que ledit capteur (400) est un capteur d'humidité relative, et dans lequel les changements d'humidité affectent ledit diélectrique sensible à l'humidité et changent ainsi la valeur capacitive dudit circuit capacitif série.

8. Procédé selon la revendication 7, dans lequel la répétition des étapes (c), (d) et (e) jusqu'à ce qu'une valeur capacitive voulue pour l'un au moins de Cx1 et de Cx2 soit obtenue, se fait tout en maintenant ladite charge de tension fixe sur le circuit capacitif série, et en tenant compte de toute affectation des changements de ladite humidité sur ledit diélectrique sensible à l'humidité (420) et ladite valeur capacitive.

100

170

160

150

140

130

120

110

*Figure 1*
*(Prior Art)*

**200**

245

245

250 240

280 CX 230

220

*Figure 2*
*(Prior Art)*

EP 1 695 073 B1

*Figure 3*
*(Prior Art)*

400

417  450  440  427

417

430  CX1  460  CX2

427
405

417

420  425

410

*Figure 4*

EP 1 695 073 B1

*Figure 5*

EP 1 695 073 B1

Figure 6

EP 1 695 073 B1

Figure 7

EP 1 695 073 B1

PHASE 1

*Figure 8*

PHASE 2

*Figure 9*

EP 1 695 073 B1

*Figure 10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4564882 A
- US 6222376 B
- US 4831325 A
- DE 1938767 A
- US 4924064 A
- FR 2687834 A
- US 4470096 A